# EUROPEAN PATENT APPLICATION

(11) **EP 3 121 151 A1**
(43) Date of publication of application: **25.01.2017**
(21) Application number: 15764601.9
(22) Date of filing: 20.03.2015
(51) Int. Cl.: C01F 11/18, C08K 3/26, C08K 9/04, C08L 101/00

(54) **NEEDLE-SHAPED STRONTIUM CARBONATE MICROPARTICLES AND DISPERSION LIQUID THEREOF**

(30) Priority: 20.03.2014 JP 2014058837
(71) Applicant: Ube Material Industries, Ltd., Ube-shi, Yamaguchi 755-8510 (JP)
(72) Inventor: NOGITA, Rika, Ube-shi Yamaguchi 755-8510 (JP); HIMOTO, Takeshi, Ube-shi Yamaguchi 755-8510 (JP)
(74) Representative: Beckmann, Claus
(86) International application number: PCT/JP2015/058411
(87) International publication number: WO 2015/141817

(57) **Abstract**

A powder of acicular strontium carbonate particles comprises primary particles having a mean longitudinal diameter in the range of 5 to 50 nm and a mean aspect ratio in the range of 2.2 to 5.0, and a dispersion liquid in which the powder of acicular strontium carbonate particles is dispersed in an organic solvent substantially in the form of primary particles; which preferably have a surface active agent having a hydrophilic group, a hydrophobic group and a group forming an anion in water attached to their surfaces.

## Description

### FIELD OF THE INVENTION

The present invention relates to fine acicular or needle-shaped strontium carbonate particles and a dispersion liquid thereof. The invention particularly relates to a dispersion liquid in which the fine acicular strontium carbonate particles are dispersed in an organic solvent essentially in the form of primary particles and a powder comprising acicular strontium carbonate particles which is preferably employable for the preparation of the above-mentioned dispersion liquid. The invention further relates to a polymer resin composition comprising a polymer resin in which the fine acicular strontium carbonate particles are dispersed under highly dispersed conditions.

### BACKGROUND OF THE INVENTION

It is well known that a polymer resin product produced by drawing in a certain direction or molded by applying a pressure to molten polymer resin in a certain direction shows birefringence. For instance, an optical film prepared by drawing a cast film as well as a molded polymer resin product produced for optical uses such as an optical lens generally show birefringence.

Patent publication 1 (JP 2004-35347 A) describes a method for reducing the birefringence observed in molded polymer resin products which comprises dispersing acicular strontium carbonate particles in the polymer resin whereby the birefringence caused by orientation of polymer chains is offset by birefringence caused by the acicular strontium carbonate particles dispersed in the polymer resin. In the publication, there is given such note that the method comprising dispersing solid particles such as acicular strontium carbonate particles in the polymer resin may reduce transparency of the resulting products. For keeping the appropriate transparency of the polymer resin products, Patent publication 1 states that it is advantageous to employ acicular strontium carbonate particles having an average length of 500 nm or less, particularly 200 nm or less.

It is noted that the working example given in Patent publication 1 discloses a process for producing a film containing acicular strontium carbonate particles dispersed therein, which comprises the steps of dispersing acicular strontium carbonate particles (average particle size: 400 nm) in tetrahydrofuran; dissolving a polymer resin in the resulting tetrahydrofuran dispersion to give a polymer resin-containing dispersion; spreading the polymer resin-containing dispersion on a glass plate; evaporating the solvent from the spread polymer resin solution to give a film; and finally drawing the resulting film. In the production of a film containing acicular strontium carbonate particles by the above-mentioned process, it is required to uniformly disperse the acicular strontium carbonate particles in the solvent for the polymer resin

Patent publication 2 (WO 2012/111692 A) describes that a powder of strontium carbonate showing high dispersibility in an organic solvent such as methylene chloride can be obtained by pretreatment of surfaces of fine strontium carbonate fine particles with a surface active agent having a hydrophilic group, a hydrophobic group and a group forming an anion in water. In this publication, there is given a working example describing a powder of acicular strontium carbonate particles having a mean aspect ratio of 2.70 and a mean longitudinal diameter of 110 nm, which are determined from the electron microscopic image. The working example further describes that the above-mentioned powder of acicular strontium carbonate showed a mean particle size of 170 nm in the dispersion using methylene chloride as a dispersing medium.

Patent publication 3 (WO 2011/052680 A) describes a fine strontium carbonate powder comprising spherical particles having a mean aspect ratio of 2.0 or less.

### SUMMARY OF THE INVENTION

A polymer resin composition for the use as material to produce optical members containing acicular strontium carbonate particles is required to show high transparency. For enhancing transparency of the polymer resin composition, the acicular strontium carbonate particles to be dispersed in the polymer resin are required to be fine particles. However, up to now, there has been not known fine acicular strontium carbonate particles which are capable of giving enough transparency to a molded polymer resin product. Particularly, sufficiently fine acicular strontium carbonate particles showing high dispersibility in a polymer resin and giving enough transparency to a molded polymer resin product have not been known.

Accordingly, it is an object of the invention to provide fine acicular strontium carbonate particles which are capable of giving high transparency to a molded polymer resin product when the particles are dispersed in a polymer resin. The invention has a particular object to provide fine acicular strontium carbonate particles which are uniformly dispersible in a polymer resin so as to give a molded polymer resin product showing high transparency when the particles are dispersed in a polymer resin.

The invention has another object to provide a powder of acicular strontium carbonate comprising fine acicular strontium carbonate particles which is capable of being uniformly dispersed in an organic solvent, particularly in a hydrophobic organic solvent, which is employed for preparing a polymer resin solution. Furthermore, the invention has an object to provide a dispersion liquid comprising acicular strontium carbonate particles dispersed in an organic solvent in which the acicular strontium carbonate particles are dispersed in the organic solvent substantially in the form of primary particles.

The inventors of the invention have found that fine acicular strontium carbonate particles can be produced by a process designed by modifying the process of Patent publication 3 for preparing spherical strontium carbonate particles, in more detail, by modifying the conditions of carbonation of strontium hydroxide in an aqueous solution utilizing carbon dioxide (which are adopted in the process described in Patent publication 3). The inventors have further found that the resulting fine acicular strontium carbonate particles can be converted into acicular strontium carbonate particles comprising primary particles having a mean longitudinal diameter in the range of 5 to 50 nm and a mean aspect ratio in the range of 2.2 to 5.0 by aging at a high temperature.

The inventors have furthermore found that the above-mentioned acicular strontium carbonate particles comprising primary acicular strontium carbonate particles having a mean longitudinal diameter in the range of 5 to 50 nm and a mean aspect ratio in the range of 2.2 to 5.0 can be processed by bringing a dispersion liquid of the acicular strontium carbonate particles into contact with a rotator rotating at a circumferential speed in the range of 10 to 60 m/sec., in the presence of a surface active agent having a hydrophilic group, a hydrophobic group and a group forming an anion in water, to apply shearing force thereto, whereby obtaining a dispersion liquid of acicular strontium carbonate particles to surfaces of which the surface active agent is attached, and drying thus obtained dispersion liquid.

A further study on the thus obtained dry acicular strontium carbonate particles to surfaces of which the surface active agent is attached has revealed that the dry acicular strontium carbonate particles show prominently high dispersibility in an organic solvent, particularly in a hydrophobic organic solvent, and that accordingly they are of extremely high value for preparing a dispersion liquid in which the acicular strontium carbonate particles are very uniformly dispersed in the organic solvent.

The highly uniform conditions of the above-mentioned dispersion can be easily confirmed by one or both of the following procedures:
(1) D₅₀ of the acicular strontium carbonate particles in the dispersion liquid determined by the dynamic light scattering procedure is in the range of 5 to 50 nm and D₉₀ is 100 nm or less;
(2) a dispersion liquid containing the acicular strontium carbonate particles in an organic solvent in a concentration of 0.5 to 8.0 weight percent shows a transmittance of 60% or higher for a light of wavelength of 600 nm.

The inventors have furthermore found that a polymer resin composition prepared by incorporating into a polymer resin a dispersion liquid of the aforementioned fine acicular strontium carbonate particles in an organic solvent can be employed for producing a molded product in which the acicular strontium carbonate particles are very uniformly dispersed and satisfactorily well oriented.

Accordingly, there is provided by the invention a powder comprising acicular strontium carbonate particles which comprises primary acicular strontium carbonate particles having a mean longitudinal diameter in the range of 5 to 50 nm and a mean aspect ratio in the range of 2.2 to 5.0.

There is further provided a process for preparing a powder comprising acicular strontium carbonate particls comprising primary acicular strontium carbonate particles having a mean longitudinal diameter in the range of 5 to 50 nm and a mean aspect ratio in the range of 2.2 to 5.0 in which the strontium carbonate particles have a surface active agent having a hydrophilic group, a hydrophobic group and a group forming an anion in water attached to surfaces thereof, which comprises the steps of bringing a dispersion liquid of the powder comprising acicular strontium carbonate particles which comprises primary acicular strontium carbonate particles having a mean longitudinal diameter in the range of 5 to 50 nm and a mean aspect ratio in the range of 2.2 to 5.0 into contact with a rotator rotating at a circumferential speed in the range of 10 to 60 m/sec., in the presence of a surface active agent having a hydrophilic group, a hydrophobic group and a group forming an anion in water, to apply shearing force thereto, whereby obtaining a dispersion liquid of acicular strontium carbonate particles to surfaces of which the surface active agent is attached; and drying thus obtained dispersion liquid.

There is furthermore provided a dispersion liquid of acicular strontium carbonate particles comprising primary particles having a mean longitudinal diameter in the range of 5 to 50 nm and a mean aspect ratio in the range of 2.2 to 5.0 dispersed in an organic solvent and which shows D₅₀ in the range of 5 to 50 nm and D₉₀ of not more than 100 nm for acicular strontium carbonate particles, the D₅₀ and D₉₀ being determined by dynamic light scattering method.

There is still furthermore provided a dispersion liquid of acicular strontium carbonate particles which comprises primary acicular strontium carbonate particles having a mean longitudinal diameter in the range of 5 to 50 nm and a mean aspect ratio in the range of 2.2 to 5.0 dispersed in an organic solvent in a concentration of 0.5 to 8.0 weight percent and which shows a transmittance of 60% or higher for light of a wavelength of 600 nm.

There is still furthermore provided a polymer resin composition comprising a polymer resin in which acicular carbonate particles comprising primary acicular carbonate particles having a mean longitudinal diameter in the range of 5 to 50 nm and a mean aspect ratio in the range of 2.2 to 5.0 are dispersed therein.

Preferred embodiments of the powder comprising acicular strontium carbonate particles according to the invention are described below:
1) The strontium carbonate particles have a surface active agent having a hydrophilic group, a hydrophobic group and a group forming an anion in water attached to surfaces thereof.
2) The hydrophilic group of the surface active agent is a polyoxyalkylene group, the hydrophobic group is an alkyl group or an aryl group, and the group forming an anion in water is an acid group selected from those consisting of a carboxylic acid group, a sulfuric acid group and a phosphoric acid group.
3) The powder satisfies one or both of the following conditions (1) and (2):
   (1) a dispersion liquid of the powder of acicular strontium carbonate which is prepared by subjecting a mixture of one gram of the powder and 99 grams of methylene chloride to ultrasonic dispersing processing and subsequent filtration using a membrane filter having a pore size of 1 µm shows D₅₀ in the range of 5 to 50 nm and D₉₀ of not more than 100 nm for acicular strontium carbonate particles, the D₅₀ and D₉₀ being determined by dynamic light scattering method;
   (2) a dispersion liquid of the powder comprising acicular strontium carbonate which is prepared by subjecting a mixture of one gram of the powder and 99 grams of methylene chloride to ultrasonic dispersing processing and subsequent filtration using a membrane filter having a pore size of 1 µm shows a transmittance of 60% or higher for light of a wavelength of 600 nm.

Preferred embodiments of the dispersion liquid of acicular strontium carbonate particles according to the invention are described below:
4) The acicular strontium carbonate particles have a surface active agent having a hydrophilic group, a hydrophobic group and a group forming an anion in water attached to surfaces thereof.
5) The D₅₀ is 1.5 times or less that of the mean longitudinal diameter of the primary particles of the acicular strontium carbonate particles.
6) The organic solvent is a hydrophobic organic solvent.

Preferred embodiments of the polymer resin composition according to the invention are described below:
7) The acicular strontium carbonate particles have a surface active agent having a hydrophilic group, a hydrophobic group and a group forming an anion in water attached surfaces thereof.
8) The polymer resin composition is for the use of producing an optic product.

### EFFECTS OF THE INVENTION

The powder of the invention comprising acicular strontium carbonate particles is favorably employable for easily preparing a dispersion liquid comprising fine acicular strontium carbonate particles dispersed in an organic solvent essentially in the form of primary particles or analogous particles. Further, the powder of the invention comprising fine acicular strontium carbonate particles is favorably employable in industry for producing a polymer resin composition comprising fine acicular strontium carbonate particles dispersed in a polymer resin the form of primary particles or analogous particles. The polymer resin composition in which fine acicular strontium carbonate particles are dispersed in the form of primary particles or analogous particles is favorably employable for producing a polymer resin molded product having high transparency.

### BRIEF DESCRIPTIONS OF THE DRAWINGS

Fig. 1 is a TEM photo of a section of a molded product of a polycarbonate resin containing the acicular strontium carbonate powder therein which was prepared in Example 1.
Fig. 2 is a TEM photo of a section of a molded product of a polycarbonate resin containing the acicular strontium carbonate powder therein which was prepared in Comparison Example 1.

### EMBODIMENTS FOR PERFORMING THE INVENTION

The powder comprising acicular strontium carbonate particles according to the invention comprises primary acicular strontium carbonate particles having a mean longitudinal diameter in the range of 5 to 50 nm and a mean aspect ratio in the range of 2.2 to 5.0.

The acicular strontium carbonate particles of the powder of the invention can be prepared by introducing gaseous carbon dioxide into a stirred aqueous solution or dispersion of strontium hydroxide in the presence of an organic acid having at least one hydroxyl group and at least one carboxyl group (under such condition that the total number of these groups are at least three, and the organic acid specifically is tartaric acid) so as to carbonize the strontium hydroxide. The resulting aqueous dispersion containing spherical fine strontium carbonate particles having an aspect ratio of 2 or less is then aged by heating the aqueous dispersion generally to a temperature of 60°C or higher, preferably in the range of 60 to 100°C, more preferably 70 to 100°C. By the aging, the spherical fine strontium carbonate particles grow in the longitudinal direction to give the desired acicular particles.

The aqueous solution or aqueous dispersion contains strontium hydroxide in a concentration generally of 1 to 20 wt.%, preferably of 2 to 15 wt.%, more preferably of 3 to 8 wt.%. The organic acid preferably has one or two carboxyl groups under such conditions that the total number of the hydroxyl group and carboxyl group is in the range of 3 to 6. Preferred examples of the organic acids include tartaric acid, malic acid and gluconic acid. The organic acid is used in an amount generally of 0.1 to 20 weight parts, preferably of 1 to 10 weight parts, per 100 weight parts of strontium hydroxide. The gaseous carbon dioxide is introduced at a flow rate generally of 0.5 to 200 mL/min., preferably of 0.5 to 100 mL/min., per one gram of strontium hydroxide. The produced spherical strontium carbonate particles having an aspect ratio of 2 or less preferably has a BET specific area in the range of 20 to 180 m²/g, more preferably in the range of 40 to 180 m²/g, specifically preferably in the range of 60 to 180 m²/g. It is not always required that the spherical strontium carbonate particles are in the form of true sphere, but may be in the form of long sphere or cube or rectangle having rounded edges. WO 2011/052680 A describes details of the method for preparing fine spherical strontium carbonate particles.

The acicular strontium carbonate particles of the invention preferably have on their surfaces a surface active agent having a hydrophilic group, a hydrophobic group and a group forming an anion in water. It is preferred that the hydrophilic group of the surface active agent is a polyoxyalkylene group, the hydrophobic group is an alkyl group or an aryl group, and the group forming an anion in water is selected from those consisting of a carboxylic acid group, a sulfuric acid group, and a phosphoric acid group.

It is more preferred that the hydrophilic group is a polyoxyalkylene group having an oxyalkylene group of 1 to 4 carbon atoms, the hydrophobic group is an alkyl group having 3 to 30 carbon atoms or an aryl group having 6 to 30 groups. The alkyl group and aryl group may have a substituent. The group forming an anion in water preferably is a carboxylic acid group (-COOH), a sulfuric acid group (-OSO₃H) or a phosphoric acid group (-OPO(OH)₂ or - OPO(OH)O-). These acid groups may have an alkali metal ion such as Na or K or ammonium group in place of the hydrogen atom of the acid group.

The surface active agent having a carboxylic acid group preferably is a compound represented by the formula (I) below:

R¹-O-(-E¹-O-)ₐ-CH₂COOH ··· (I)

In the formula (I), R¹ represents a substituted or unsubstituted alkyl group or a substituted or unsubstituted aryl group; E¹ represents an alkylene group having 1 to 4; and "a" is a number of 1 to 20, preferably 2 to 6. R¹ preferably is an alkyl group having 10 or more carbon atoms, more preferably 10 to 18 carbon atoms.

The surface active agent having a phosphoric acid group preferably is a compound represented by the formula (II) or (III) below, or a mixture of these compounds:

R²-O-(-E²-O-)_{b}-PO(OH)₂ ··· (II)

In the formula (II), R² represents a substituted or unsubstituted alkyl group or a substituted or unsubstituted aryl group; E² represents an alkylene group having 1 to 4; and "b" is a number of 1 to 20, preferably 2 to 6. R² preferably is an alkyl group having 10 or more carbon atoms, more preferably 10 to 18 carbon atoms.

[R³-O-(-E³-O-)_{c}-]₂-PO(OH) ··· (III)

In the formula (III), R³ represents a substituted or unsubstituted alkyl group or a substituted or unsubstituted aryl group; E³ represents an alkylene group having 1 to 4; and "c" is a number of 1 to 20, preferably 2 to 6. R³ preferably is an alkyl group having 10 or more carbon atoms, more preferably 10 to 18 carbon atoms.

The surface active agent can be a compound described in the Patent publication 2 (WO 2011/111692 A).

The surface active agent can be attached to surfaces of the acicular strontium carbonate particles of the powder comprising acicular strontium carbonate particles according to the invention preferably by bringing a dispersion liquid of the powder comprising acicular strontium carbonate particles which comprises primary acicular strontium carbonate particles having a mean longitudinal diameter in the range of 5 to 50 nm and a mean aspect ratio in the range of 2.2 to 5.0 into contact with a rotator rotating at a circumferential speed in the range of 10 to 60 m/sec., in the presence of the above-mentioned surface active agent, to apply shearing force thereto. The resulting dispersion liquid containing acicular strontium carbonate particles having surfaces to which the surface active agent is attached can be dried to obtain the desired dry powder of acicular strontium carbonate particles.

The surface active agent is generally placed in the dispersion liquid in an amount of 1 to 50 weight parts, preferably 5 to 40 weight parts, per 100 weight parts of the acicular strontium carbonate particles in the aqueous medium.

In the aforementioned procedure, the acicular strontium carbonate particles can be dispersed in the aqueous medium in the form of primary particles by means of a rotator rotating at a such high circumferential speed in the range of 10 to 60 m/sec., so as to apply high shearing force to the acicular strontium carbonate particles. The rotator preferably rotates at a circumferential speed in the range of 20 to 50 m/sec., more preferably in the range of 30 to 40 m/sec. A favorably employable dispersing device may be Clearmix (trademark) supplied by M. Technic Co., Ltd.

The thus treated dispersion liquid can be dried by means of a known dryer such as a spray dryer or a drum dryer. If desired, the dispersion can be processed to remove aggregated particles having a diameter of 1 µm or more, in advance of subjecting the dispersion to the drying step.

The acicular strontium carbonate particles obtained by the above-mentioned processing comprise primary particles surfaces of which is attached the surface active agent having a hydrophilic group, a hydrophobic group and a group forming an anion in water. The presence of the surface active agent on the surface of the primary particles can be confirmed by FT-IR (Fourier transform infrared spectroscopy).

The powder comprising acicular strontium carbonate particles according to the invention, specifically, the powder comprising acicular strontium carbonate particles surfaces of which is attached the surface active agent preferably satisfy at least one of the following conditions (1) and (2), more preferably both conditions:
(1) a dispersion liquid of the powder comprising acicular strontium carbonate which is prepared by subjecting a mixture of one gram of the powder and 99 grams of methylene chloride to ultrasonic dispersing processing and subsequent filtration using a membrane filter having a pore size of 1 µm shows D₅₀ in the range of 5 to 50 nm and D₉₀ of not more than 100 nm for acicular strontium carbonate particles, the D₅₀ and D₉₀ being determined by dynamic light scattering method;
(2) a dispersion liquid of the powder comprising acicular strontium carbonate particles which is prepared by subjecting a mixture of one gram of the powder and 99 grams of methylene chloride to ultrasonic dispersing processing and subsequent filtration using a membrane filter having a pore size of 1 µm shows a transmittance of 60% or higher (preferably 70% or higher, more preferably 80% or higher) for light of a wavelength of 600 nm.

D₅₀ means a particle diameter at which the undersize fraction reaches 50%, and D₉₀ means a particle diameter at which the undersize fraction reaches 90%.

In the condition (1), the dynamic light scattering method can be performed by irradiating a light to a dispersion liquid in which the acicular particles move in the mode of Brownian motion. In this procedure, the irradiated light is scattered at various strength levels according to the particle sizes. The particle diameter determined by the dynamic light scattering method is a volume base particle diameter which may be diameter of aggregated particles if the particles are aggregated in the dispersion liquid. In addition, the dynamic light scattering method may detect a diameter of the longitudinal direction as well as a diameter of the breadth direction, when the particles are acicular particles. Therefore, D₅₀ may be smaller than the mean diameter of the primary particles.

As described before, D₅₀ generally is 1.5 times, preferably 0.8 to 1.4 times, that of the diameter in the longitudinal direction, preferably 0.8 to 1.4 times.

In the condition (2) above, the transmittance of light is a value based on the transmittance of the organic solvent used for the preparation of the dispersion liquid. The transmittance should be 60% or more, preferably 70% or more, more preferably 75% or more, most preferably 80% or more, but generally does not exceed 100%.

The concentration of the acicular strontium carbonate particles, which is preferably in the range of 0.7 to 7.0 wt.%, is given based on the total amount of the dispersion liquid.

The dispersion liquid of fine acicular strontium carbonate particles according to the invention is a dispersion liquid of acicular strontium carbonate particles the primary particles of which have a mean longitudinal diameter in the range of 5 to 50 nm and a mean aspect ratio in the range of 2.2 to 5.0 in organic solvent. The organic solvent can be a hydrophobic organic solvent which is generally employed for preparing a polymer resin solution. Examples of the hydrophobic solutions include hydrocarbons and halogenated hydrocarbons. Examples of the hydrocarbons include cyclohexane, benzene, toluene and xylene. Examples of the halogenated hydrocarbons include methylene chloride, chloroform and carbon tetrachloride.

The mean longitudinal diameter of the primary acicular strontium carbonate particles dispersed in the organic solvent can be confirmed by an electron microscopic image taken on the acicular strontium carbonate particles recovered from the dispersion liquid. The primary particles are particles constituting a powder or an aggregate mass and a minimum particle which cannot be further divided without breaking the molecular bonding of the particles.

A mean aspect ratio (longitudinal diameter/breadth diameter) of the primary particles is in the range of 2.2 to 5.0, preferably 2.2 to 4.0.

The dispersion liquid of acicular strontium carbonate particles can be prepared by a process comprising the steps of mixing an acicular strontium carbonate powder of the invention and an organic solvent and subjecting the resulting mixture to dispersing processing. The dispersing processing can be performed by ultrasonic dispersing or stirring. After the dispersing processing is performed, the resulting dispersion liquid can be subjected to filtration for removing aggregated particles having a diameter of 1 µm or more.

The polymer resin composition in which the powder comprising acicular strontium carbonate particles according to the invention is dispersed is described below in more detail.

The polymer resin composition can be produced by the steps of placing a polymer resin in a dispersion liquid containing acicular strontium carbonate particles, to dissolve the polymer resin in the dispersion liquid, spreading the resulting solution on a substrate to form a coat layer, and drying the coat layer to remove the solvent. The polymer resin solution can be spread on the substrate, for example, by spin coating or roll coating.

The polymer resin solution containing the acicular strontium carbonate particles can be prepared by simultaneously mixing the powder comprising acicular strontium carbonate particles, polymer resin and solvent. Otherwise, the acicular strontium carbonate particles-containing polymer resin solution can be prepared by mixing the powder comprising acicular strontium carbonate particles and a polymer resin solution.

The acicular strontium carbonate particles-containing polymer resin solution can be converted into a molded product by means of a molding apparatus such as an injection molding machine or an extrusion molding machine.

Examples of the polymer resins include cycloolefin resin, polycarbonate resin, poly(methyl methacrylate) resin, poly(ethylene terephthalate) resin and cellulose ester resin.

In the polymer resin composition, the acicular strontium carbonate particles are contained in an amount of 1 to 40 wt.%, preferably in an amount of 1 to 25 wt.%, based on the amount of the polymer resin.

### Examples

### [Example 1]

### (1) Preparation of dispersion liquid containing acicular strontium carbonate particles

In 3L of pure water kept at 10°C, 366 g of strontium hydroxide octahydroxides (product of Kanto Chemical, Co., Ltd., special grade) is placed and mixed to prepare a dispersion liquid containing strontium hydroxide in a concentration of 5.6 wt.%. In the aqueous strontium hydroxide dispersion was placed 14.2 g (= 0.039 g per one gram of strontium hydroxide) of DL-tartaric acid (product of Wako Junyaku, Co., Ltd.), and mixed to dissolve the DL-tartaric acid in the aqueous dispersion. Subsequently, gaseous carbon dioxide was introduced into the aqueous strontium hydroxide-containing dispersion kept at 10°C at a flow rate of 0.5 L/min. (= 2.9 mL/min. for one gram of strontium hydroxide) until the aqueous dispersion reached pH 7, whereby producing an aqueous acicular strontium carbonate particles-containing dispersion. The resulting aqueous dispersion was heated to 95°C for 12 hours to grow and extend to produce the acicular strontium carbonate particles. The heated dispersion was then cooled to room temperature, to obtain an aqueous acicular strontium carbonate particles-containing dispersion.

A portion of the obtained aqueous dispersion was taken and dried to give a powder of acicular strontium carbonate particles. The acicular strontium carbonate particles of the powder were coated with osmium, and an electron microscopic image of the coated particles was taken by means of FE-SEM (Field Emission Scanning Electron microscope). A thousand particles of the acicular strontium carbonate particles seen in the electron microscopic image were measured with respect to their longitudinal diameters and breadth diameters. It was determined that the mean longitudinal diameter of the primary particles was 35 nm and the mean aspect ratio was 2.3.

### (2) Preparation of powder comprising acicular strontium carbonate particles

In 500mL-volume beaker were placed 300 mL of the aqueous acicular strontium carbonate particle dispersion prepared in (1) above and 4.5 g of a surface active agent (polyoxyalkylene alkyl ether-carboxylic acid having the below-illustrated formula), and they were mixed by stirring for 5 minutes using a stirrer.

H₂₅C₁₂-O- (-CH₂-CH₂-O-)₃-CH₂COOH

The aqueous polyoxyalkylene alkyl ether-carboxylic acid-containing dispersion prepared above was placed in a stirring apparatus (Clearmix, available from M. Technic Co., Ltd.) and stirred for 15 minutes under such conditions of a chiller temperature of 4°C and a stirring rotation rate of 20,000 r.p.m. (circumferential speed: 30 m/sec.). The thus stirred dispersion was sprayed on an iron plate heated to 130°C and dried to remove water. The powdery product remaining on the iron plate was collected to obtain the desired powder comprising acicular strontium carbonate particles.

### [Example 2]

The procedures of Example 1 for preparing a powder of acicular strontium carbonate particles were repeated except that the surface active agent was replaced with polyoxyalkylene alkyl ether-phosphoric acid having the following formula:.

H₂₇C₁₃-[O-(-CH₂-CH₂-O-)₆-]₂-PO (OH)

### [Example 3]

The procedures of Example 1 for preparing a powder of acicular strontium carbonate particles were repeated except that the surface active agent was replaced with polyoxyalkylene alkyl ether-carboxylic acid having the following formula:

H₂₇C₁₃-O-(-CH₂-CH₂-O-)₁₀-CH₂COOH

### [Comparison Example 1]

The procedures of Example 3 for preparing a powder of acicular strontium carbonate particles were repeated except that the stirring apparatus was replaced with a homomixer and the stirring was carried out for one hour at a stirring rate of 4,000 r.p.m. (circumferential speed: 7.85 m/sec.).

### [Evaluation of dispersibility of powder comprising acicular strontium carbonate particles in methylene chloride]

The dispersibility of powder comprising acicular strontium carbonate particles prepared in Examples 1 to 3 and Comparison Example 1 in methylene chloride was evaluated from the particle size distribution and light transmittance which were determined according to the below-described method.

### (1) Measurement of particle size distribution of the acicular strontium carbonate particles in dispersion

A mixture of one gram of a powder comprising acicular strontium carbonate articles and 99 g of methylene chloride was subjected to ultrasonic dispersing in a ultrasonic bath for 30 seconds. The resulting dispersion liquid was filtered on a membrane filter having a pore size of 1 µm to prepare a dispersion liquid having a concentration of 1 wt.%.

The resulting dispersion liquid was subjected to measurement of particle size distribution of the acicular strontium carbonate particles by the dynamic light scattering method using the measuring apparatus (Nanotrack UPA-150, available from Nikkiso Co., Ltd. In Table 1, D₅₀ and D₉₀ derived from the measured particle size distribution are set forth.

### (2) Measurement of transmittance of dispersion liquid containing acicular strontium carbonate particles

A mixture of one gram of a powder comprising acicular strontium carbonate particles and 99 g of methylene chloride was subjected to ultrasonic dispersing in a ultrasonic bath for 30 seconds. The resulting dispersion liquid was filtered on a membrane filter having a pore size of 1 µm to prepare a dispersion liquid having a concentration of 1 wt.%.

The resulting dispersion was placed in a rectangular cell (length of optical path: 10 mm), and the transmittance was determined using a light having a wavelength of 600 nm by means of a spectrophotometer.

In the same manner, dispersion liquids respectively containing the acicular strontium carbonate particles in concentrations of 3 wt.% and 5 wt.% were prepared and subjected to the measurement of light transmittance.

The measurement was repeated five times for each dispersion liquid and their mean value was calculated for each dispersion liquid. The transmittance in terms of mean value is set forth in Table 1. The transmittance was given as a relative value based on the transmittance of methylene chloride.

In the case that the amount of the particles contained in the dispersion liquid obtained after subjecting to filtration is reduced by 10 wt.% from the amount of the particles contained in the dispersion liquid before subjecting to the filtration, that is, in the case that the particles in the dispersion liquid were collected on the filter in an amount of 10 wt.% or more, the dispersion liquid was set the mark of "fail (wrong dispersion)" and no transmittance was measured.

**Table 1**

| | Particle size distribution | | Transmittance (%) | | |
|---|---|---|---|---|---|
| | D₅₀ (nm) | D₉₀ (nm) | 1 wt.% | 3 wt.% | 5 wt.% |
| Example 1 | 23 | 49 | 90 | 76 | 73 |
| Example 2 | 37 | 77 | 90 | 78 | 70 |
| Example 3 | 29 | 80 | 86 | 75 | 66 |
| Com.Ex. 1 | 190 | 230 | fail | fail | fail |

The results set forth in Table 1 indicate that the powders comprising acicular strontium carbonate particles prepared in Examples 1 to 3 show prominently high dispersibility in methylene chloride, as compared with the powder comprising acicular strontium carbonate particles prepared in Comparison Example 1.

### [Preparation of polycarbonate resin composition]

A mixture of 0.48 gram of a powder comprising acicular strontium carbonate particles and 30 mL of cyclohexane was subjected to ultrasonic dispersing in a ultrasonic bath for 30 seconds. The resulting dispersion liquid was filtered on a membrane filter having a pore size of 1 µm to prepare a dispersion liquid containing acicular strontium carbonate particles.

To the resulting dispersion liquid was added 6 g of polycarbonate resin. The resulting mixture was stirred for 2 hours by means of a mix rotor, to dissolve the polycarbonate resin in the dispersion liquid. The resulting polycarbonate resin solution containing the acicular strontium carbonate particles was subjected to ultrasonic dispersing by means of a ultrasonic homogenizer and then subjected to defoaming processing for 3 minutes by means of a defoamer (Awatori Neritaro, available from Sinky Co., Ltd.). The defoamed dispersion was spread on a glass plate to form a coat layer. The coat layer was dried at room temperature to remove cyclohexane from the coated layer. Thus, the desired polycarbonate resin composition was produced.

### [Evaluation of dipersibility of acicular strontium carbonate particles in polycarbonate resin]

Two polycarbonate resin compositions containing dispersed acicular strontium carbonate particles were produced employing the powders comprising acicular strontium carbonate particles prepared in Example 1 and Comparison Example 1, respectively, and two specimens of the polycarbonate resin compositions were produced from the above-produced polycarbonate resin compositions. A section of the specimen (molded product) was observed by means of TEM (Transmission Electron Microscope).

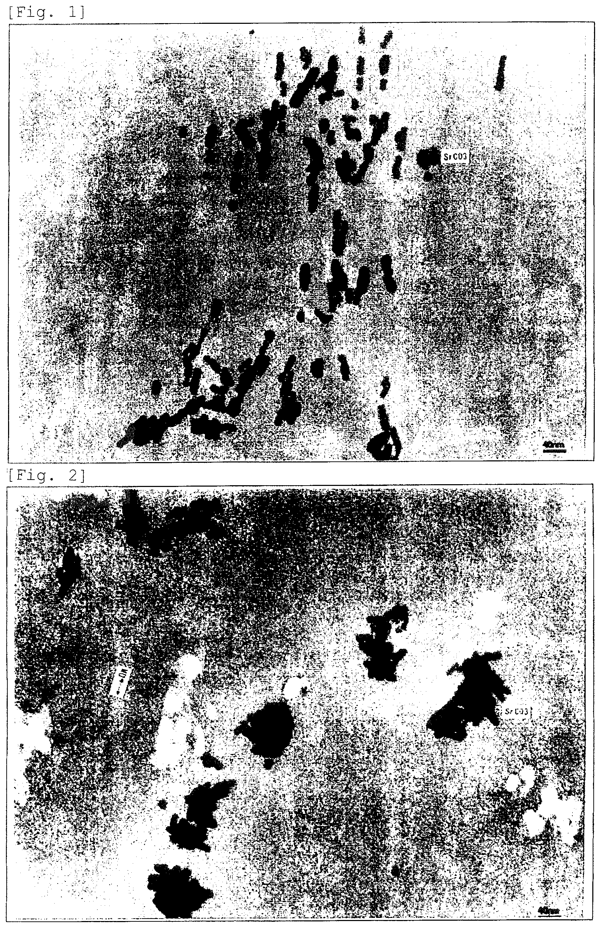

The TEM picture of the polycarbonate resin composition in which the powder of acicular strontium carbonate particles prepared in Example 1 was dispersed is given in Fig. 1, and the TEM picture of the polycarbonate resin composition in which the powder of acicular strontium carbonate particles prepared in Comparison Example 1 was dispersed is given in Fig. 2.

It is understood from the TEM picture of Fig. 1 that very fine acicular strontium carbonate particles according to the invention are dispersed in the molded polycarbonate resin product in the form of primary particles or analogous particles. In contrast, the primary acicular strontium carbonate particles are randomly oriented and aggregated to form a aggregated particles in Fig. 2.

## Claims

1. A powder comprising acicular strontium carbonate particles which comprises primary acicular strontium carbonate particles having a mean longitudinal diameter in the range of 5 to 50 nm and a mean aspect ratio in the range of 2.2 to 5.0.

2. The powder comprising acicular strontium carbonate particles described in claim 1, in which the strontium carbonate particles have a surface active agent having a hydrophilic group, a hydrophobic group and a group forming an anion in water attached to surfaces thereof.

3. The powder comprising acicular strontium carbonate particles described in claim 2, in which the hydrophilic group of the surface active agent is a polyoxyalkylene group, the hydrophobic group is an alkyl group or an aryl group, and the group forming an anion in water is an acid group selected from those consisting of a carboxylic acid group, a sulfuric acid group and a phosphoric acid group.

4. The powder comprising acicular strontium carbonate particles described in claim 1, which satisfies one or both of the following conditions (1) and (2):
(1) a dispersion liquid of the powder comprising acicular strontium carbonate particles which is prepared by subjecting a mixture of one gram of the powder and 99 grams of methylene chloride to ultrasonic dispersing processing and subsequent filtration using a membrane filter having a pore size of 1 µm shows D₅₀ in the range of 5 to 50 nm and D₉₀ of not more than 100 nm for acicular strontium carbonate particles, the D₅₀ and D₉₀ being determined by dynamic light scattering method;
(2) a dispersion liquid of the powder of acicular strontium carbonate particles which is prepared by subjecting a mixture of one gram of the powder and 99 grams of methylene chloride to ultrasonic dispersing processing and subsequent filtration using a membrane filter having a pore size of 1 µm shows a transmittance of 60% or higher for light of a wavelength of 600 nm.

5. A process for preparing a powder comprising acicular strontium carbonate particles which comprisesp primary acicular strontium carbonate particles having a mean longitudinal diameter in the range of 5 to 50 nm and a mean aspect ratio in the range of 2.2 to 5.0 in which the strontium carbonate particles have a surface active agent having a hydrophilic group, a hydrophobic group and a group forming an anion in water attached to surfaces thereof, which comprises the steps of:
bringing a dispersion liquid of the powder comprising acicular strontium carbonate particles which comprises primary acicular strontium carbonate particles having a mean longitudinal diameter in the range of 5 to 50 nm and a mean aspect ratio in the range of 2.2 to 5.0 into contact with a rotator rotating at a circumferential speed in the range of 10 to 60 m/sec., in the presence of a surface active agent having a hydrophilic group, a hydrophobic group and a group forming an anion in water, to apply shearing force thereto, whereby obtaining a dispersion liquid of acicular strontium carbonate particles to surfaces of which the surface active agent is attached;
and
drying thus obtained dispersion liquid.

6. A dispersion liquid of acicular strontium carbonate particles comprising primary particles having a mean longitudinal diameter in the range of 5 to 50 nm and a mean aspect ratio in the range of 2.2 to 5.0 dispersed in an organic solvent and which shows D₅₀ in the range of 5 to 50 nm and D₉₀ of not more than 100 nm for acicular strontium carbonate particles, the D₅₀ and D₉₀ being determined by dynamic light scattering method.

7. The dispersion liquid of acicular strontium carbonate particles described in claim 6, in which the acicular strontium carbonate particles have a surface active agent having a hydrophilic group, a hydrophobic group and a group forming an anion in water attached to surfaces thereof.

8. The dispersion liquid of acicular strontium carbonate particles described in claim 6, in which the D₅₀ is 1.5 times or less that of the mean longitudinal diameter of the primary particles of the acicular strontium carbonate particles.

9. The dispersion liquid of acicular strontium carbonate particles described in claim 6, in which the organic solvent is a hydrophobic organic solvent.

10. The dispersion liquid of acicular strontium carbonate particles described in claim 6, in which the acicular strontium carbonate particles are dispersed in the organic solvent in a concentration of 0.5 to 8.0 weight percent and which shows a transmittance of 60% or higher for light of a wavelength of 600 nm.

11. A dispersion liquid of acicular strontium carbonate particles which comprises primary acicular strontium carbonate particles having a mean longitudinal diameter in the range of 5 to 50 nm and a mean aspect ratio in the range of 2.2 to 5.0 dispersed in an organic solvent in a concentration of 0.5 to 8.0 weight percent and which shows a transmittance of 60% or higher for light of a wavelength of 600 nm.

12. The dispersion liquid of acicular strontium carbonate particles described in claim 11, in which the organic solvent is a hydrophobic organic solvent.

13. A polymer resin composition comprising a polymer resin in which acicular strontium carbonate particles comprising primary particles having a mean longitudinal diameter in the range of 5 to 50 nm and a mean aspect ratio in the range of 2.2 to 5.0 are dispersed therein.

14. The polymer resin composition described in claim 13, in which the acicular strontium carbonate particles have a surface active agent having a hydrophilic group, a hydrophobic group and a group forming an anion in water attached surfaces thereof.
